# EUROPEAN PATENT SPECIFICATION

(11) **EP 0 317 831 B1**
(45) Date of publication and mention of the grant of the patent: **17.03.1993**
(21) Application number: 88118690.2
(22) Date of filing: 10.11.1988
(51) Int. Cl.: G21C 3/34

(54) **Nuclear-fuel-rod supporting grid**
Haltegitter für Kernbrennstäbe
Grille de support pour barreaux de combustible nucléaire

(30) Priority: 25.11.1987 US 125514
(43) Date of publication of application: 31.05.1989
(73) Proprietor: WESTINGHOUSE ELECTRIC CORPORATION, Pittsburgh Pennsylvania 15222 (US)
(72) Inventor: Demario, Edmand Emory, Columbia, SC 29205 (US); Street, Bobby David, West Columbia, SC 29169 (US)
(74) Representative: Gallo, Wolfgang, Dipl.-Ing. (FH)

(56) References cited:
- FR-A- 2 365 182
- US-A- 3 928 131

## Description

The present invention relates generally to nuclear fuel assemblies and, more particularly, to a nuclear fuel rod supporting grid therefor.

In most nuclear reactors, the reactor core consists of a large number of elongate fuel assemblies each including a plurality of fuel rods held in an organized array by means of support grids spaced apart axially along the fuel assembly and attached to elongate structural elements, usually control-rod guide thimbles, which have end structures of the fuel assembly secured to opposite ends thereof.

As well known in the art, the main function of support grids in a fuel assembly is to laterally support the fuel rods against vibration thereof, and to keep them precisely spaced from one another. One popular grid design is known from U.S.-A-4,492,844 disclosing grids each of which consists of metallic inner and outer straps interleaved to form an egg-crate-like structure which defines open cells for receiving the fuel rods and the control-rod guide guide thimbles, the perimeter of the grid being defined by the outer straps which are joined together at their ends and which have connected thereto the ends of the inner straps. The fuel rods extending through the various cells are laterally supported therein by means of detents, such as compliant springs and relatively rigid dimples, which are formed out of the metal of the interleaved straps and project into the respective cells far enough to frictionally engage and laterally support the fuel rods extending therethrough. The springs in the cells of such conventional grid are oriented substantially parallel to the longitudinal axes of the respective cells whereas the dimples, which are arcuate so as to define open spaces between themselves and the respective strap sections from which they protrude, are oriented in planes substantially perpendicular to the longitudinal axes of the cells so as to minimize the flow impedance offered to reactor coolant flowing through the grid.

Furthermore, FR-A-2 365 182 discloses a fuel rod support grid in which each cell wall defining strap section comprises a pair of vertically spaced dimples and a resiliently yieldable spring therebetween. The spring has an elongate spring portion extending diagonally through an opening formed in that strap section, and the dimples are formed by remaining horizontally extending portions of the strap section above and below said opening. The spring and the dimples both arche from the plane of the strap section inwards of an associated cell in a manner such as to define between themselves and the plane of the strap section a space permitting unimpeded flow of coolant therethrough.

The invention has for its principal object to provide an improved grid with dimples which likewise minimize flow impedance and, in addition, are essentially immune from damage caused during insertion of fuel rods into the grid cells.

The invention accordingly recides in a nuclear fuel rod supporting grid as defined in claim 1.

The arcuate dimples thus slanted form in effect a ramp over which a fuel rod gripper employed during insertion of a fuel rod and the fuel rod being inserted can slide without the risk of snagging such as could cause cocking of the dimple and, consequentially, result in scratching and fretting of the fuel rod being inserted.

Preferably, each dimple is slanted about forty-five degrees relative to the longitudinal axis of the associated cell.

Preferred embodiments of the invention will now be described, by way of example only, with reference to the accompanying drawings, in which:-
Figure 1 is an elevational view, partly in section, of a nuclear fuel assembly shown in vertically foreshortened form and with parts thereof broken away for clarity;
Fig. 2 is an enlarged top plan view, as seen along line 2--2 of Fig. 1, of one of the fuel rod support grids of the fuel assembly;
Fig. 3 is an enlarged fragmentary top plan view of the lower right-hand corner of the grid as shown in Fig. 2;
Figs. 4 and 5 are elevational views as seen along lines 4--4 and 5--5, respectively, of Fig. 3;
Fig. 6 is an enlarged fragmentary top plan view of one of a first set of inner straps of the grid embodying the invention;
Figs. 7 and 8 are side elevational views as seen along lines 7--7 and 8--8, respectively, of Fig. 6;
Fig. 9 is a view similar to Fig. 6 but showing one of a second set of inner straps interfitting with the straps of the first set;
Figs. 10 and 11 are side elevational views as seen along lines 10--10 and 11--11, respectively, of Fig. 9;
Fig. 12 is an enlarged fragmentary top plan view of a modified inner strap with dimples having an alternative orientation;
Figs. 13 and 14 are side elevational views as seen along lines 13--13 and 14--14, respectively, of Fig. 12;
Fig. 15 is a fragmentary portion of the side elevational view of Fig. 8;
Figs. 16 to 21 are different sectional views taken along lines 16--16, 17--17, 18--18, 19--19, 20--20 and 21--21, respectively, of Fig. 15 and showing curvatures of the dimples and spring disposed on the particular strap section illustrated in Fig. 15;
Fig. 22 is a view of an inner strap portion similar to Fig. 15 but showing still another alternative dimple orientation;
Figs. 23 to 28 are different sectional views taken along lines 23--23, 24--24, 25--25, 26--26, 27--27 and 28--28, respectively, of Fig. 22 and showing curvatures of the dimples and spring disposed on the particular strap section illustrated in Fig. 22;
Fig. 29 is a fragmentary portion of the side elevational view of Fig. 14; and
Figs. 30 to 35 are different sectional views taken along lines 30--30, 31--31, 32--32, 33--33, 34--34 and 35--35, respectively, of Fig. 22 and showing curvatures of the dimples and spring disposed on the particular strap section illustrated in Fig. 29.

In the following description, like reference characters designate like or equivalent parts throughout the several views of the drawings, and terms such as "forward", "rearward", "left", "right", "above", "below" and the like are used as words of convenience not to be construed as limiting terms.

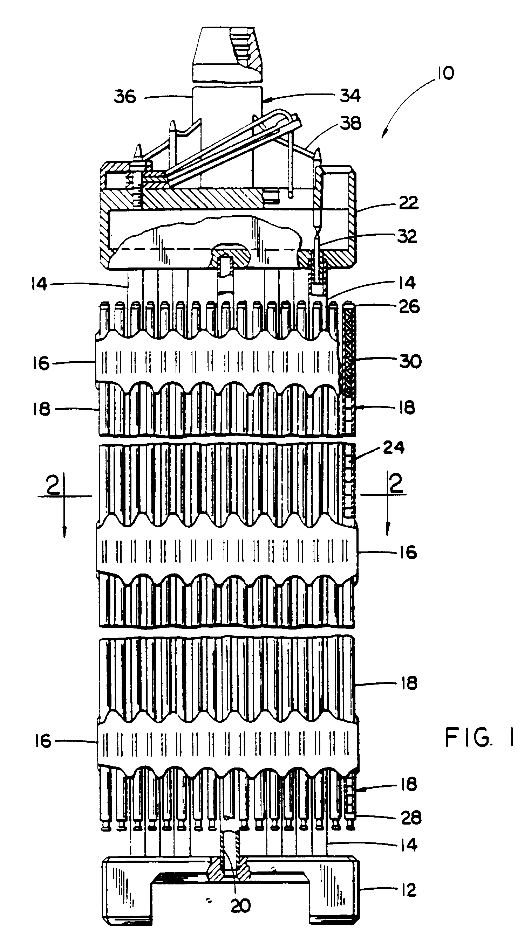

Referring initially to Fig. 1, the fuel assembly shown therein and designated generally with reference numeral 10 is of the type commonly used in pressurized-water reactors. Basically, it comprises a lower end structure or bottom nozzle 12 for supporting the assembly on the lower core plate (not shown) in the core region of a nuclear reactor (not shown), a plurality of guide tubes or thimbles 14 longitudinally extending upward from the bottom nozzle 12, a plurality of transverse grids 16 axially spaced apart along, and supported by, the guide thimbles 14, a plurality of elongate fuel rods 18 transversely spaced and supported in an organized array by the grids 16, an instrumentation tube 20 located in the center of the fuel assembly, and an upper end structure or top nozzle 22 attached to the upper ends of the guide thimbles 14. With the parts thus arranged, the fuel assembly 10 forms an integral unit which can be conveniently handled without damage to its parts.

Each fuel rod 18 contains pellets 24 of fissile fuel and has its opposite ends hermetically sealed by means of end plugs 26 and 28, a plenum spring 30 being disposed between the upper end plug 26 and the stack of pellets 24 to maintain the latter firmly stacked within the rod 18. The top nozzle 22 supports a rod cluster control mechanism 34 including an internally threaded cylindrical member 36 with radially extending arms 38 each of which is connected to a control rod 32 axially movable in one of the guide thimbles 14, the control mechanism 34 being operable to move the control rods 32 up and down so as to control the fission process in the fuel assembly 10, all as well known in the art.

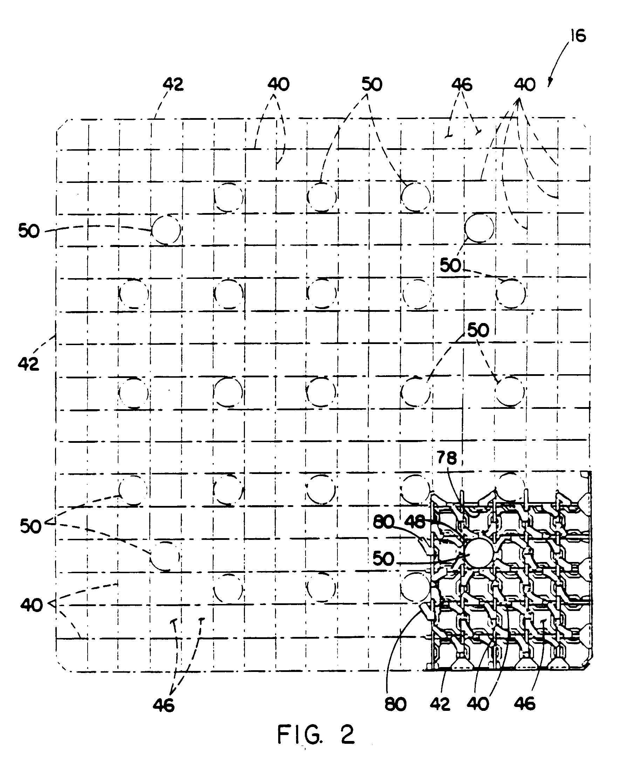

Referring now to Figs. 2 to 5, the grid 16 illustrated therein is composed of inner straps 40 and outer straps 42 each having slots 44 formed therein to enable the straps to be interleaved with one another in an egg-crate-like configuration so as to form a matrix of open cells 46 for the fuel rods 18, and openings 48 for the guide thimbles, to extend therethrough. The straps 40, 42 are secured, preferably welded, together at their intersections. The openings 48 have inserted therein sleeves 50 which are attached, preferably welded, to the inner straps 40 and are employed to affix the grid 16 to the guide thimbles 14. Reference numeral 80 designates mixing vanes 80 formed, if desired, along the downstream (having regard to coolant flow) edges of the respective inner and outer straps of the grid 16.

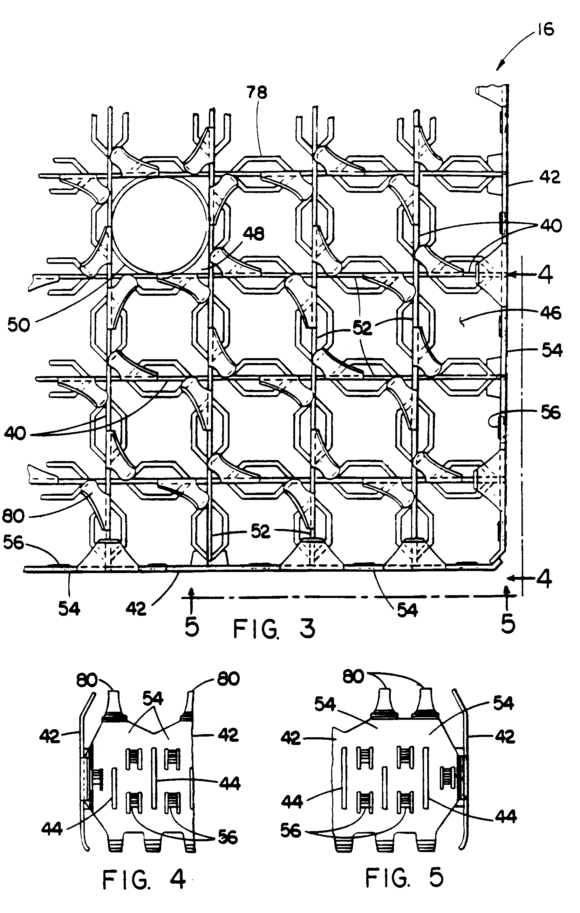

Each of the fuel-rod receiving cells 46 is defined by two pairs of oppositely disposed walls formed by strap sections which have fuel-rod engaging and supporting structure formed thereon. More particularly, and as shown in Figs. 3 to 5, the outer straps 42 define cell-wall sections 54 each of which has thereon a pair of vertically spaced fuel-rod engaging dimples 56 formed integral therewith. Similarly, the inner straps 40 define cell-wall sections 52 each of which has disposed thereon two vertically spaced dimples 78 and a resiliently yieldable spring 60 therebetween, the dimples 78 projecting from one side of the associated strap section 52, and the spring 60 projecting from the opposite side thereof. Each cell 46 formed along the periphery of the grid 16 by the inner and outer straps 40, 42 has associated therewith four dimples 56,78 and two springs 60, and each cell 46 formed in the grid 16 only by inner straps 40 has associated therewith four dimples 78 and two springs 60; thus, the fuel rod in each cell 46 is contacted and supported at six circumferentially and axially displaced locations thereon.

The springs 60 consist of flexible, resiliently yieldable material, e.g. stainless steel, which is formed, preferably stamped, out of the respective inner straps 40. Basically, each spring 60 comprises two elongate spring legs 62 which extend in substantially parallel spaced relationship with respect to one another in a direction substantially parallel to the longitudinal axis of the associated grid cell 46, and an elongate spring cross-member 64 which extends diagonally between the two spring legs 62 and has its opposite ends integrally connected thereto. Each spring 60 thus formed by two spring legs 62 and a diagonal cross-member 64 has an effective length substantially greater than the actual length which it occupies on the associated strap section 52. The cross-member 64 of each spring 60 preferably is slanted at an angle of about 45° with respect to the associated spring legs 62 and to the longitudinal axis of the associated grid cell 46. Each spring leg 62 is slightly bowed out of the plane of the associated strap section 52 and projects from the latter into the associated grid cell 46. Likewise, each cross-member 64 is arched along a longitudinal section thereof and projects from its associated wall section 52 toward the longitudinal axis of the associated grid cell 46, however to a greater extent than the spring legs 62, i.e. far enough for its apex to engage and support the fuel rod 18 extending through the associated cell 46.

Upon insertion of a fuel rod into the cell 46, the cross-member 64 of the spring 60 will resiliently yield and be deflected by the fuel rod toward the associated strap section 52. In consequence of this resilient deflection of the cross-member 64, the spring legs 62 of the spring 60 will likewise be resiliently deflected, back into the plane of the associated strap section 52, and hence will not impede the flow of coolant through the grid cell 46.

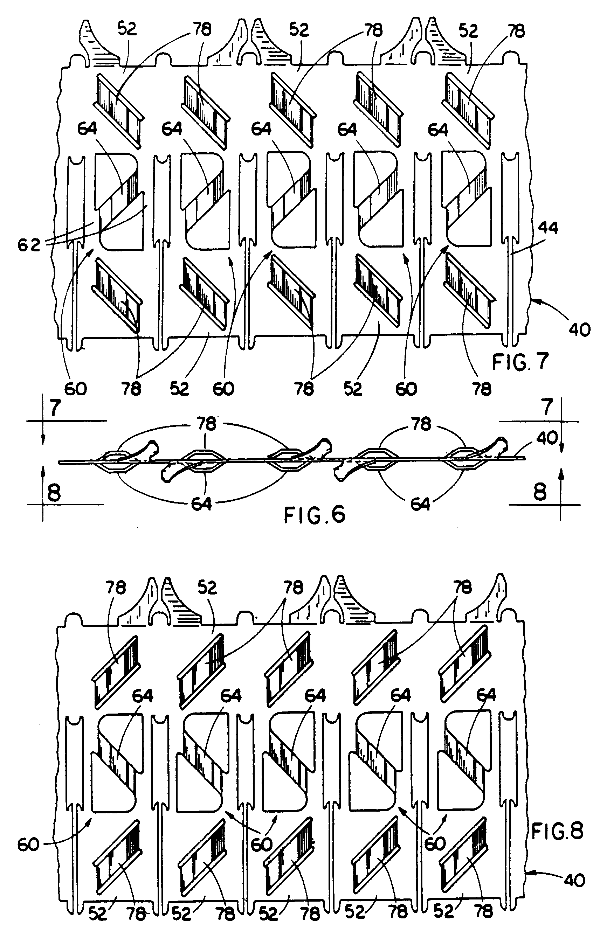

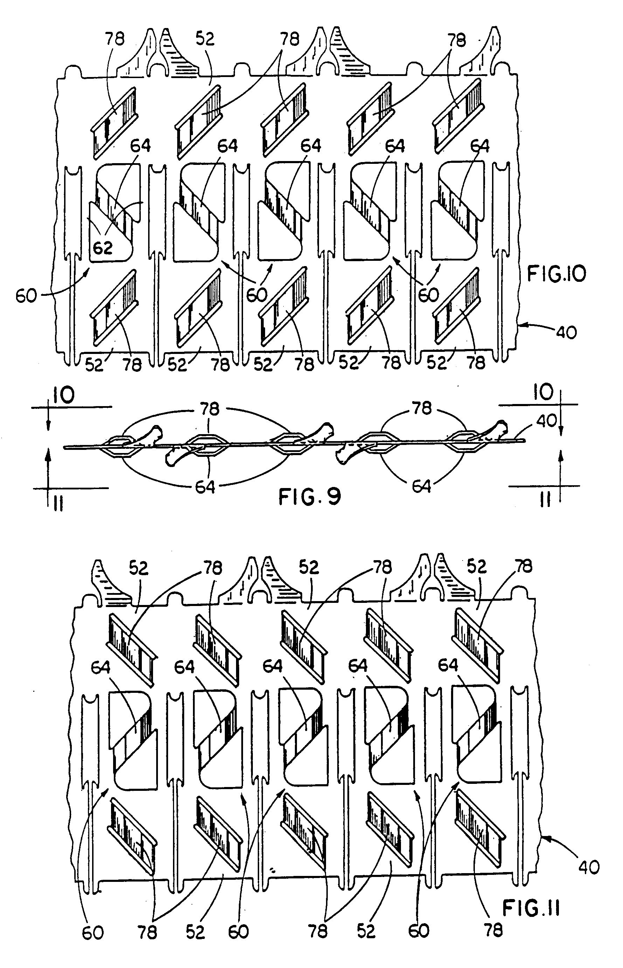

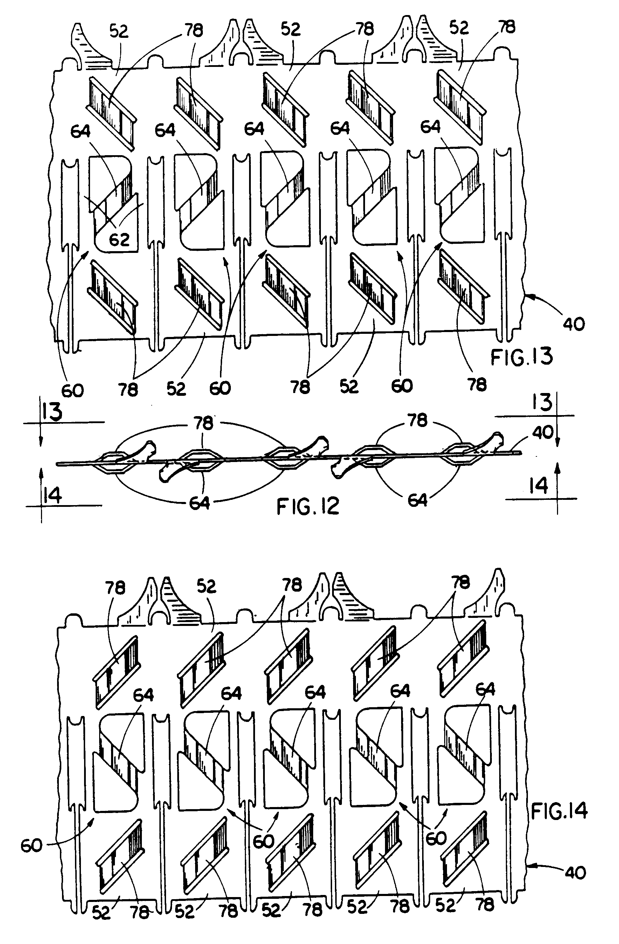

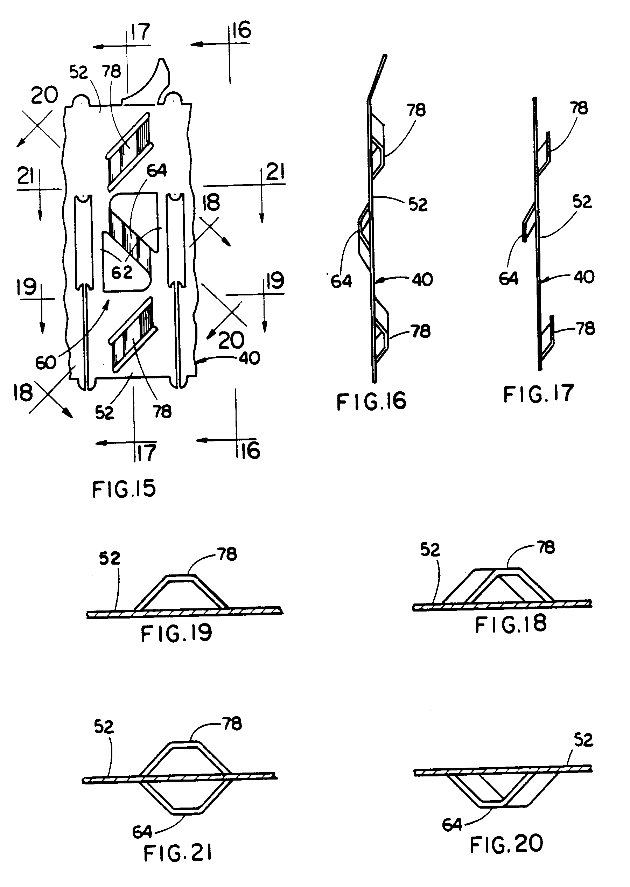

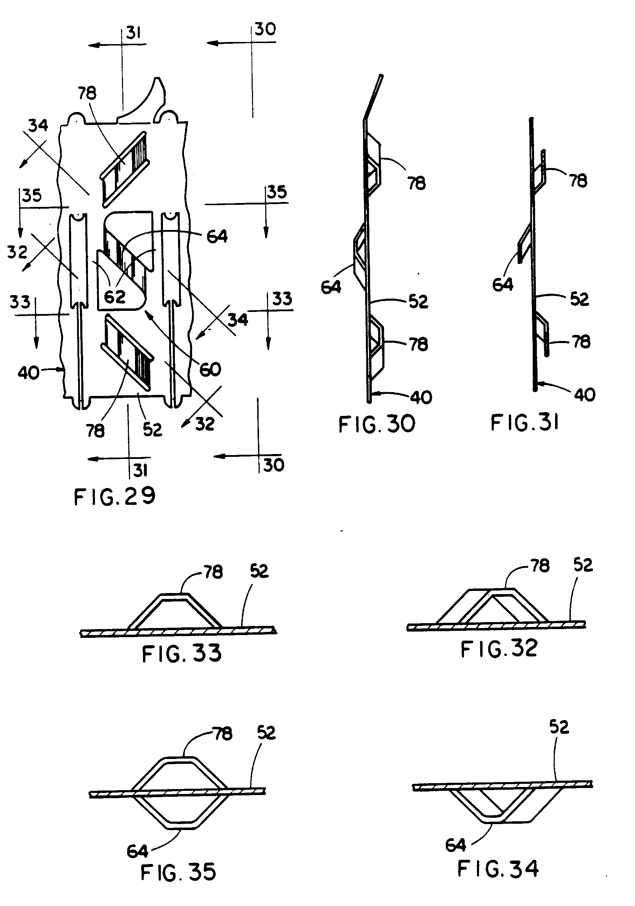

Turning now to Figs. 6 to 35 showing the preferred embodiments of the invention, the dimples 78, as mentioned hereinbefore, are formed integral with the inner straps 40, preferably being stamped from the respective strap sections 52, and each strap section 52 has disposed thereon two dimples 78 and one grid spring 60 therebetween, the dimples 78 projecting from one side of the strap section and the grid spring 60 projecting from its opposite side. Each dimple 78 is arcuate, along a longitudinal section therethrough, and arches from the plane of the associated strap section 52 inwards of the respective grid cell 46 adjacent thereto.

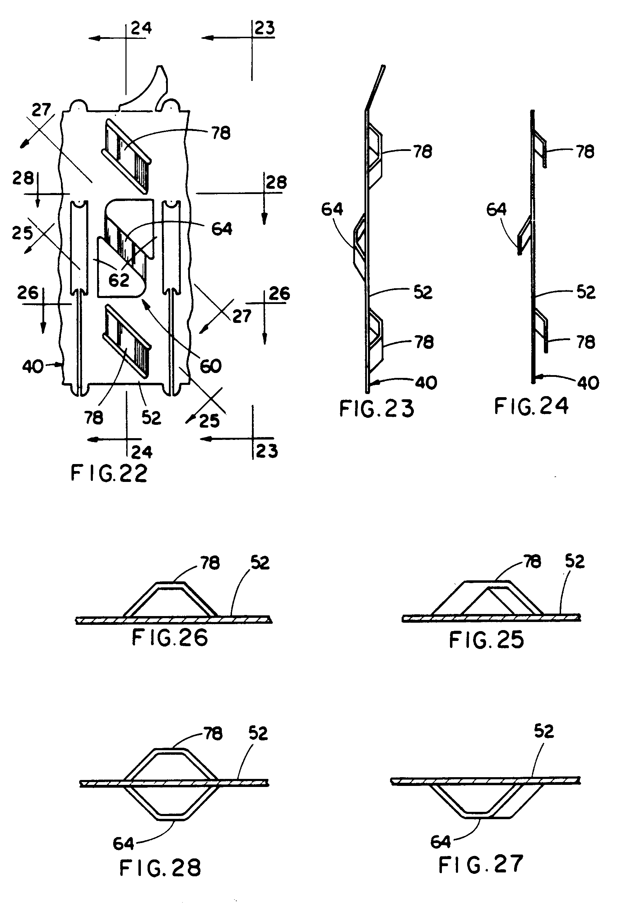

In accordance with the invention, each dimple 78 is diagonal or slanted, preferably about 45°, with respect to the longitudinal axis of the associated grid cells 46, in a direction substantially parallel to the strap section 52 from which it protrudes. In the embodiment shown in Figs. 6-8 and Figs. 9-11, the two slanted dimples 78 on each wall section 52 are oriented substantially parallel with respect to each other and substantially orthogonal, or perpendicular, with respect to the longitudinal orientation of the diagonal cross-member 64 of the associated spring 60. In the modification shown in Figs. 12-14, the two slanted dimples 78 on each wall section 52 extend in directions substantially perpendicular to one another, one dimple 78 being oriented substantially parallel and the other substantially perpendicular with respect to the diagonal cross- member 64 of the associated spring 60. In the embodiment of Figs. 22-27, the slanted dimples 78 and the diagonal cross-member 64 of the associate spring 60 all are oriented substantially in parallel with respect to each other.

It will be appreciated that all of the embodiments illustrated have in common that each arcuate dimple 78 is slanted, with respect to the longitudinal axes of the associated grid cell 46, in a direction substantially parallel to the wall section 52 from which it protrudes, thus affording the advantages initially mentioned herein.

## Claims

1. A nuclear fuel rod supporting grid (16) composed of a plurality of straps (40) interleaved with one another in a manner forming a matrix of fuel-rod receiving cells (46) each defined by sections (52) of said straps which form walls of the respective cell and have fuel-rod engaging and supporting structure disposed thereon, the fuel-rod engaging and supporting structure on each strap section (52) comprising two vertically spaced dimples (78) and a resiliently yieldable spring (60) therebetween, said spring having an elongated spring portion (64) connected at its opposite ends to the associated strap section (52) and arching therefrom inwards of an associated cell (46) in a manner such as to define, between itself and the plane of the strap section a space which permits unimpeded coolant flow therethrough, said elongate spring portion (64) being slanted with respect to the longitudinal axis of the associated cell (46), and said dimples (78) arching from the associated strap section (52) inwards of an associated cell (46) in a manner such as to define between themselves and the plane of said strap section a space permitting unimpeded flow of coolant therethrough, characterized in that said dimples (78) are slanted with respect to the longitudinal axis of the associated cell in a direction substantially perpendicular to the longitudinal direction of said elongate spring portion (46).

2. A nuclear fuel rod supporting grid according to claim 1, characterized in that said dimples (78) are slanted at substantially fourty-five degrees with respect to said longitudinal axis.

## Patentansprüche

1. Kernbrennstab-Haltegitter (16), das aus einer Vielzahl von in solcher Weise ineinandergreifenden Streifen (40) zusammengesetzt ist, daß eine Matrix aus brennstabaufnehmenden Zellen (46) hergestellt wird, die jeweils durch Wände der betreffenden Zelle bildende und daran angeordnete Brennstabanlage- und -Abstützelemente aufweisende Abschnitte (52) der genannten Streifen gebildet sind, wobei die Brennstabanlage- und -Abstützelemente an jedem Streifenabschnitt (52) zwei mit vertikalem Abstand angeordnete Noppen (78) und eine dazwischen angeordnete, elastisch nachgiebige Feder (60) aufweisen und die Feder einen länglichen Federteil (64) aufweist, der an seinen entgegengesetzten Enden mit dem zugeordneten Streifenabschnitt (52) verbunden ist und von da aus einwärts bogenförmig in eine zugeordnete Zelle (46) in solcher Weise vorspringt, das er zwischen sich und der Ebene des Streifenabschnitts einen Raum begrenzt, der einen ungehinderten Kühlmittelströmungsdurchtritt ermöglicht, wobei der längliche Federteil (64) mit Bezug auf die Längsachse der betreffenden Zelle (46) schräg verläuft und die Noppen (78) von dem zugeordneten Streifenabschnitt (50) der betreffenden Zelle (46) in solcher Weise bogenförmig einwärts vorspringen, daß sie zwischen sich und der Ebene des Streifenabschnitts einen Raum begrenzen, der einen ungehinderten Kühlmittelströmungsdurchtritt ermöglicht, dadurch gekennzeichnet, das die Noppen (78) mit Bezug auf die Längsachse der betreffenden Zelle in einer etwa senkrecht zur Längsrichtung des genannten länglichen Federteils (64) verlaufenden Richtung schräg angeordnet sind.

2. Kernbrennstab-Haltegitter nach Anspruch 1, dadurch gekennzeichnet, das die genannten Noppen (78) unter etwa 45° C mit Bezug auf die genannte Längsachse schräg angeordnet sind.

## Revendications

1. Une grille de support (16) pour barreau de combustible nucléaire composée d'une pluralité de languettes (40) entrecroisées les unes avec les autres pour former une matrice de cellules (46) destinées a recevoir les barreaux de combustible, dont chacune est délimitée par des parties (52) desdites languettes qui constituent les parois de la cellule correspondante, et sur lesquelles est disposée une structure supportant et maintenant le barreau de combustible, la structure supportant et maintenant le barreau de combustible sur chaque partie de languette (52) étant constituée de deux pattes (78) espacées verticalement et d'un ressort (60) fléchissant élastiquement entre elles, ledit ressort comportant une partie allongée (64) de ressort reliée au niveau de ses extrémités opposées à la partie de languette associée (52), et se courbant en arc de celle-ci vers l'intérieur de la cellule associée (46) de telle manière que soit défini, entre elle et le plan de la partie de languette, un espace qui y permet l'écoulement sans entrave du fluide caloporteur, ladite partie allongée de ressort étant inclinée par rapport à l'axe longitudinal de la cellule (46) associée, et lesdites pattes (78) se courbant en arc depuis la partie de languette associée (52) vers l'intérieur de la cellule (46) associée, de telle manière que soit défini entre elles-même et le plan de la partie de languette un espace qui y permet l'écoulement sans entrave du fluide caloporteur, caractérisée en ce que lesdites pattes (78) sont inclinées par rapport à l'axe longitudinal de la cellule associée dans une direction sensiblement perpendiculaire à la direction longitudinale de ladite partie allongée (46) du ressort.

2. Une grille de support pour barreau de combustible nucléaire selon la revendication 1, caractérisée en ce que lesdites pattes (78) sont inclinées à sensiblement 45° par rapport audit axe longitudinal.
